# EUROPÄISCHE PATENTSCHRIFT

(11) **EP 4 157 686 B1**
(45) Veröffentlichungstag und Bekanntmachung des Hinweises auf die Patenterteilung: **10.07.2024**
(21) Anmeldenummer: 21730464.1
(22) Anmeldetag: 18.05.2021
(51) Int. Cl.: B60T 17/22

(54) **VERFAHREN ZUM BETREIBEN EINES BREMSSYSTEMS**
METHOD FOR OPERATING A BRAKING SYSTEM
PROCÉDÉ DE FONCTIONNEMENT D'UN SYSTÈME DE FREINAGE

(30) Priorität: 28.05.2020 EP 20465527; 02.06.2020 DE 102020206842
(43) Veröffentlichungstag der Anmeldung: 05.04.2023
(73) Patentinhaber: Continental Automotive Technologies GmbH, 30175 Hannover (DE)
(72) Erfinder: BUDIANU, Bogdan, 60488 Frankfurt am Main (DE); MOCANU, Ana, 60488 Frankfurt am Main (DE); STRECKER, Andreas, 60488 Frankfurt am Main (DE)
(74) Vertreter: Continental Corporation
(86) Internationale Anmeldenummer: PCT/DE2021/200068
(87) Internationale Veröffentlichungsnummer: WO 2021/239194

(56) Entgegenhaltungen:
- EP-A1- 3 113 315
- EP-A2- 1 157 873
- DE-A1- 102018 212 392

## Beschreibung

Die vorliegende Erfindung betrifft ein Verfahren zum Betreiben eines Bremssystems. Derartige Bremssysteme werden beispielsweise in Kraftfahrzeugen verwendet, um diese zu verzögern und abzubremsen. Typischerweise werden derartige Bremssysteme sowohl mit einer Batterie wie auch mit einem Fahrzeugbordnetz, das aus einer Lichtmaschine gespeist wird, verbunden, um eine erhöhte Ausfallsicherheit zu haben. Sollte beispielsweise ein Fahrzeugbordnetz aufgrund eines technischen Defekts ausfallen, so steht die Batterie als Notfallversorgung zur Verfügung. Dadurch werden Unterbrechungen oder Ausfälle bei der Funktion des Bremssystems vermieden.

Ein derartiges Verfahren zum Betreiben eines Bremssystems ist beispielsweise in dem Dokument DE 10 2018 212 392 A1 der Anmelderin beschrieben. Das hier diskutierte Verfahren ist zur Spannungsversorgung einer elektronischen Komponente in einem Kraftfahrzeug ausgebildet, wobei auf einen Unterspannungsimpuls mit einem Generatorbetrieb eines Elektromotors eines Bremssystems reagiert wird.

Es hat sich jedoch gezeigt, dass es bei einem Ausfall des Fahrzeugbordnetzes und einer dann notwendigen Umschaltung auf Batteriebetrieb zu besonders hohen Strömen kommen kann, welche eine Belastung für Komponenten darstellen können.

Es ist deshalb eine Aufgabe der Erfindung, ein Verfahren zum Betreiben eines Bremssystems bereitzustellen, welches alternativ oder besser ausgeführt ist, beispielsweise einen zu hohen Strom beim Umschalten auf Batteriebetrieb verhindert.

Dies wird erfindungsgemäß durch ein Verfahren gemäß Anspruch 1 erreicht. Vorteilhafte Ausgestaltungen sind beispielsweise den Unteransprüchen zu entnehmen. Der Inhalt der Ansprüche wird durch ausdrückliche Inbezugnahme zum Inhalt der Beschreibung gemacht.

Die Erfindung betrifft ein Verfahren zum Betreiben eines Bremssystems. Das Bremssystem weist einen ersten Eingangsspannungsanschluss und einen zweiten Eingangsspannungsanschluss auf. Es weist einen Elektromotor auf. Ferner weist es eine schaltbare Verbindung zwischen einem ersten Verbindungspunkt, welcher mit dem ersten Eingangsspannungsanschluss verbunden ist, und einem zweiten Verbindungspunkt, welcher mit dem zweiten Eingangsspannungsanschluss und dem Elektromotor verbunden ist, auf.

Die schaltbare Verbindung ist im Normalbetrieb geöffnet. Ansprechend auf eine detektierte Spannungsdifferenz zwischen dem ersten Eingangsspannungsanschluss und dem zweiten Eingangsspannungsanschluss, welche über einem ersten Schwellenwert liegt, wird der Elektromotor in einem Rekuperationsmodus betrieben. Dann wird ansprechend auf eine detektierte Spannungsdifferenz zwischen dem ersten Verbindungspunkt und dem zweiten Verbindungspunkt, welche unter einem zweiten Schwellenwert liegt, die schaltbare Verbindung geschlossen.

Mittels eines solchen Verfahrens kann sichergestellt werden, dass sich eine Spannungsdifferenz zwischen dem ersten Verbindungspunkt und dem zweiten Verbindungspunkt zunächst auf einen Wert verringert, welcher deutlich unter den ansonsten auftretenden Werten von Spannungsdifferenzen liegt. Hierzu wird der Rekuperationsmodus des Elektromotors verwendet. Bei einer geringeren Spannungsdifferenz, welche also unter dem zweiten Schwellenwert liegt, ist ein deutlich geringerer Stromfluss aufgrund dieser Spannungsdifferenz zu erwarten, als wenn nicht vorher der Rekuperationsmodus verwendet worden wäre. Dies stellt im Vergleich zu bekannten Ausführungen einen erheblichen Vorteil dar, da Komponenten geschont werden können, welche bei den ansonsten auftretenden hohen Spannungsdifferenzen und dementsprechend hohen Strömen geschädigt werden könnten.

Der Elektromotor wird beispielsweise verwendet, um eine Pumpe oder einen Linearaktuator des Bremssystems anzutreiben. Damit kann unabhängig von einer Fahrerbetätigung Druck aufgebaut werden.

Die schaltbare Verbindung kann beispielsweise in Form eines Relais oder eines Transistors ausgeführt sein. Sie kann den ersten Verbindungspunkt und den zweiten Verbindungspunkt je nach gewünschter Situation entweder miteinander verbinden oder voneinander trennen. Der erste Verbindungspunkt kann mit dem ersten Eingangsspannungsanschluss beispielsweise direkt oder auch über einen weiteren Schalter wie beispielsweise einen Transistor oder über eine Diode verbunden sein. Gleiches gilt für die Verbindung zwischen dem zweiten Verbindungspunkt und dem zweiten Eingangsspannungsanschluss.

Die Eingangsspannungsanschlüsse sind typischerweise Anschlüsse, welche zur Verbindung mit externen elektrischen Leitern wie beispielsweise einem Fahrzeugbordnetz oder einer Batterie dienen. Insbesondere kann der erste Eingangsspannungsanschluss mit einer Batterie verbunden sein, beispielsweise einer üblichen Fahrzeugbatterie, welche als Akkumulator ausgeführt sein kann. Ein solcher Anschluss wird typischerweise als Klemme 30_1 (KL30_1) bezeichnet. Der zweite Eingangsspannungsanschluss kann insbesondere mit einem Fahrzeugbordnetz und/oder mit einer Lichtmaschine verbunden sein. Ein solcher Anschluss wird typischerweise als Klemme 30_2 (KL30_2) bezeichnet. An den beiden Eingangsspannungsanschlüssen können insbesondere jeweilige Spannungssensoren angeordnet sein, um die jeweilige anliegende Spannung zu messen. Auf diese Weise kann beispielsweise die Spannungsdifferenz zwischen den Eingangsspannungsanschlüssen detektiert werden.

Auch an den beiden Verbindungspunkten können jeweilige Spannungssensoren angeschlossen sein. Damit kann beispielsweise die Spannungsdifferenz zwischen den Verbindungspunkten detektiert werden.

Plötzliche Abfälle der Spannung sind insbesondere bei einem Fahrzeugbordnetz bzw. bei einer Verbindung mit einer Lichtmaschine zu erwarten, und somit insbesondere am zweiten Eingangsspannungsanschluss, wenn dieser mit einem Fahrzeugbordnetz oder mit einer Lichtmaschine verbunden ist und der erste Eingangsspannungsanschluss mit einer Batterie verbunden ist.

In einem Normalbetrieb kann insbesondere vorgesehen sein, dass der Elektromotor aus dem zweiten Eingangsspannungsanschluss versorgt wird.

Es kann insbesondere eine entsprechende Ansteuerschaltung für den Elektromotor vorhanden sein, welcher insbesondere auch mit einem Pufferkondensator ausgerüstet sein kann. Diese Ansteuerschaltung kann insbesondere unmittelbar an dem zweiten Verbindungspunkt angeschlossen sein. Somit können kurzfristig auftretende Spannungsschwankungen überbrückt werden, ohne dass es zu einem Ausfall des Elektromotors kommt.

Der Rekuperationsmodus kann insbesondere ein Betriebsmodus sein, in welchem der Elektromotor nicht Strom verbraucht, sondern Strom erzeugt. Typischerweise wird hierzu als Energiequelle ein Druck verwendet, welcher in einer am Elektromotor angeschlossenen Pumpe oder einem daran angeschlossenen Linearaktuator vorhanden ist und insbesondere vom Elektromotor selbst oder auch von einem manuell betätigten Hauptbremszylinder des Kraftfahrzeugs erzeugt worden sein kann. Es kann auch eine bestehende Rotation des Elektromotors als Energiequelle verwendet werden. Ein solcher Rekuperationsmodus kann typischerweise verwendet werden, um Energie beim Bremsen wiederzugewinnen und beispielsweise in eine Fahrzeugbatterie einzuspeichern. Im hier vorliegenden Fall kann er jedoch dazu verwendet werden, die Spannungsdifferenz, welche für das Fließen eines beim Schließen der schaltbaren Verbindung auftretenden Stroms verantwortlich ist, deutlich zu verringern und somit Beschädigungen zu vermeiden.

Das Betreiben des Elektromotors in dem Rekuperationsmodus kann insbesondere veranlasst werden, wenn die detektierte Spannungsdifferenz zwischen dem ersten Eingangsspannungsanschluss und dem zweiten Eingangsspannungsanschluss für eine Zeitdauer von mindestens 10 µs, mindestens 20 µs, mindestens 50 µs, mindestens 100 µs, mindestens 1 ms, mindestens 10 ms, mindestens 100 ms, mindestens 200 ms oder mindestens 300 ms über dem ersten Schwellenwert liegt. Auch andere Werte können jedoch verwendet werden.

Gemäß einer bevorzugten Ausführung wird bei geschlossener schaltbarer Verbindung ansprechend auf eine detektierte Spannungsdifferenz zwischen dem ersten Eingangsspannungsanschluss und dem zweiten Eingangsspannungsanschluss, welche für eine erste Zeitdauer unter einem dritten Schwellenwert liegt, die schaltbare Verbindung geöffnet und/oder in den Normalbetrieb zurückgekehrt. Dadurch kann erreicht werden, dass die Versorgung des Elektromotors aus dem ersten Eingangsspannungsanschluss beendet wird, sobald dies nicht mehr erforderlich ist.

Die erste Zeitdauer kann insbesondere zwischen 10 ms und 30 ms liegen. Sie kann auch 20 ms betragen. Sie kann auch beispielsweise bis zu 500 ms, 1 s oder 1,8 s betragen. Auch andere Werte sind hier jedoch möglich.

In einem Zustand, in welchem der Elektromotor in dem Rekuperationsmodus betrieben wird, jedoch die schaltbare Verbindung noch geöffnet ist, kann insbesondere für den Fall, dass die Spannungsdifferenz zwischen dem ersten Eingangsspannungsanschluss und dem zweiten Eingangsspannungsanschluss unter einen vierten Schwellenwert abfällt, wieder in den Normalbetrieb zurückgekehrt werden. Dadurch kann vermieden werden, dass überhaupt auf Batteriebetrieb bzw. Versorgung aus dem ersten Eingangsspannungsanschluss umgeschaltet wird, wenn die Unterschreitung des ersten Schwellenwerts nur eine vorübergehende war, beispielsweise aufgrund einer Schwankung im Bordnetz, der kein technischer Defekt zugrunde liegt. Dier vierte Schwellenwert kann insbesondere identisch zum ersten Schwellenwert, jedoch auch unterschiedlich dazu sein.

Insbesondere kann bei unmittelbarer Rückkehr vom Rekuperationsmodus in den Normalbetrieb, oder bei Überschreibung einer vorgegebenen Anzahl von unmittelbarer Rückkehr vom Rekuperationsmodus in den Normalbetrieb innerhalb einer vorgegebenen Überwachungszeit, eine Rückkehrsperre aktiviert werden, welche insbesondere für eine vorbestimmte Sicherungszeit aktiviert bleiben kann. Die vorbestimmte Sicherungszeit kann beispielsweise höchsten 1 s, höchsten 1,8 s oder höchsten 10 s betragen. Sie kann auch 1 s, 1,8 s oder 10 s betragen. Derartige Werte haben sich für typische Anwendungen als vorteilhaft erwiesen. Es können jedoch auch andere Werte verwendet werden. Beispielsweise kann die Sicherungszeit auch bis zum nächsten Zündungswechsel, für den aktuellen Zündungslauf oder bis zu einem Rücksetzen in einer Werkstatt dauern. Die Überwachungszeit kann beispielsweise höchstens 10 s, höchsten 20 s oder höchstens 50 s betragen. Sie kann auch 10 s, 20 s oder 50 s betragen. Sie kann auch bis zum nächsten Zündungswechsel oder für den aktuellen Zündungslauf dauern. Bei aktivierter Rückkehrsperre wird dann insbesondere eine Rückkehr in den Normalbetrieb unterbunden. Dadurch kann verhindert werden, dass mehrere kurzfristig hintereinander auftretende Schwankungen zu einem ständigen Aktivieren und Deaktivieren des Rekuperationsmodus führen. Insbesondere kann bei einem untypisch erhöhten Leitungswiderstand, beispielsweise ausgelöst durch einen korrodierten Kontakt, der zu einem erhöhten Spannungsverlust an dem zweiten Eingangsspannungsanschluss bei Normalbetrieb führt, und bei Rekuperationsbetrieb nicht zu einem erhöhten Spannungsverlust an dem zweiten Eingangsspannungsanschluss führt, das ständige Aktivieren und Deaktivieren des Rekuperationsmodus verhindert werden. Es kann beispielsweise ein Wechselzähler verwendet werden, welcher bei jeder Rückkehr vom Rekuperationsmodus direkt in den Normalbetrieb inkrementiert wird, um zu überwachen wie oft eine solche Rückkehr schon erfolgt ist.

Nach Aktivierung der Rückkehrsperre kann insbesondere ein Fehlerspeichereintrag vorgenommen werden. Dieser kann insbesondere spezifisch für eine aktivierte Rückkehrsperre sein, d.h. er ist anzeigend dafür dass einmal oder mehrmals vom Rekuperationsmodus unmittelbar in den Normalmodus gewechselt wurde. Dies kann insbesondere ein Hinweis auf einen hochohmigen Kontakt sein. Des Weiteren kann insbesondere nach Aktivierung der Rückkehrsperre auch eine Rückkehr in den Normalzustand bis zum Deaktivieren einer Zündung verhindert werden. Dies kann insbesondere auch den Fall betreffen, dass vom Rekuperationsmodus aus die schaltbare Verbindung geschlossen wird. Das Bremssystem bleibt somit für den aktuellen Zündungslauf in diesem Zustand.

Der dritte Schwellenwert kann insbesondere identisch zum ersten Schwellenwert sein. Er kann jedoch auch unterschiedlich dazu sein.

Der dritte Schwellenwert kann insbesondere zwischen 3,5 V und 4,5 V, oder 4 V, betragen. Derartige Werte haben sich als vorteilhaft herausgestellt, insbesondere in einem typischen Fahrzeugbordnetz, welches mit einer Spannung von 12 V betrieben wird. Es können jedoch auch unterschiedliche Werte verwendet werden, insbesondere dann, wenn ein Fahrzeugbordnetz mit einer unterschiedlichen Spannung verwendet wird. Dann können die hier angegebenen Spannungen beispielsweise mit der Bordnetzspannung skaliert werden.

Bevorzugt wird auch ansprechend auf eine Überschreitung einer zweiten Zeitdauer, in welcher der Elektromotor in dem Rekuperationsmodus betrieben wird, die schaltbare Verbindung geschlossen. Dadurch kann für den Fall, dass der Rekuperationsmodus nicht schnell genug die Spannungsdifferenz abbauen kann, dennoch sichergestellt werden, dass rechtzeitig in den Batteriebetrieb geschaltet wird, so dass die Stromversorgung des Elektromotors sichergestellt ist. Die zweite Zeitdauer kann insbesondere zwischen 10 ms und 100 ms, oder zwischen 25 ms und 75 ms, oder 50 ms, betragen. Auch andere Werte sind jedoch möglich.

Der erste Schwellenwert kann insbesondere zwischen 3,5 V und 4,5 V, oder 4 V, betragen. Derartige Werte haben sich als vorteilhaft erwiesen, da sie dafür sorgen, dass noch nicht bei kleineren, üblichen Spannungsschwankungen in einem Fahrzeugbordnetz der Rekuperationsmodus aktiviert wird, er jedoch trotzdem bei einer technisch bedingten Störung aktiviert wird. Auch andere Werte können jedoch verwendet werden, beispielsweise bei einer anderen Bordnetzspannung als 12 V.

Der zweite Schwellenwert kann insbesondere zwischen 0,25 V und 2 V, oder 0,5 V, betragen. Bei derartigen Spannungen treten typischerweise keine anfänglichen Ströme auf, welche zu Schäden an Komponenten führen können. Auch andere Werte sind hier jedoch möglich.

Insbesondere kann ansprechend auf eine detektierte Spannungsdifferenz zwischen dem ersten Eingangsspannungsanschluss und dem zweiten Eingangsspannungsanschluss, welche für eine dritte Zeitdauer über einem fünften Schwellenwert liegt, eine Warnfunktion aktiviert werden. Dadurch kann ein Fahrer vor eventuellen Einschränkungen beim Betrieb des Bremssystems gewarnt werden, wobei dies beispielsweise mittels einer Warnleuchte oder eines akustischen Signals erfolgen kann. Der fünfte Schwellenwert kann insbesondere gleich zum ersten Schwellenwert sein, er kann jedoch auch unterschiedlich dazu sein.

Die dritte Zeitdauer kann insbesondere zwischen 50 ms und 1 s, oder 100 ms, betragen. Sie kann auch mindestens 50 ms, mindestens 100 ms, oder mindestens 200 ms betragen. Sie kann auch höchstens 100 ms, höchstens 200 ms oder höchstens 1 s betragen. Derartige Werte haben sich für typische Anwendungen als geeignet erwiesen, da der Fahrer dann rechtzeitig gewarnt wird.

Der erste Eingangsspannungsanschluss kann insbesondere mit einer Batterie verbunden sein. Der zweite Eingangsspannungsanschluss kann insbesondere mit einem Generator verbunden sein. Ein solcher Generator kann auch als Lichtmaschine bezeichnet werden, wobei typischerweise zwischen Generator und zweitem Eingangsspannungsanschluss ein übliches Fahrzeugbordnetz liegt. Da an diesem Fahrzeugbordnetz zahlreiche Verbraucher angeschlossen sind, welche dieses belasten können, kann an einem solchen Fahrzeugbordnetz auch eine Spannungsschwankung auftreten, und es kann des Weiteren eine Fehlfunktion auftreten, auf welche wie hierin beschrieben reagiert werden kann.

An dem ersten Eingangsspannungsanschluss kann insbesondere zusätzlich zur Batterie auch ein Kondensator angeschlossen sein, wobei es sich dabei insbesondere um einen Kondensator mit sehr hoher Kapazität von beispielsweise mindestens 1 Farad und/oder höchsten 50 Farad handeln kann. Ein solcher Kondensator kann eine zusätzliche Sicherheit für den Fall bereitstellen, dass die Verbindung zu einer Batterie oder einer sonstigen am ersten Eingangsspannungsanschluss angeschlossenen Spannungsquelle unterbrochen wird. Dadurch kann selbst für den Ausfall der Batterie und den Ausfall eines Fahrzeugbordnetzes noch eine Versorgung sichergestellt werden, beispielsweise um ein Fahrzeug kontrolliert abzubremsen oder um einem Fahrer Zeit zu geben, auf eine Warnmeldung zu reagieren und sicherzustellen, dass so lange das Bremssystem für eine gewisse Zeit nicht ausfällt oder eine zu geringe Leistung bietet. Insbesondere ein solcher Kondensator kann von Strömen, welche bei Ausführungen gemäß dem Stand der Technik auftreten können, beschädigt werden. Durch die hierin beschriebene Ausführung wird er somit in besonders vorteilhafter Weise geschützt.

Insbesondere kann zwischen dem ersten Eingangsspannungsanschluss und dem ersten Verbindungspunkt ein erster Schalter oder eine erste Diode verbunden sein. Ebenso kann zwischen dem zweiten Eingangsspannungsanschluss und dem zweiten Verbindungspunkt ein zweiter Schalter oder eine zweite Diode verbunden sein. Derartige erste und/oder zweite Schalter können beispielsweise als Transistoren ausgeführt sein. Sie können insbesondere dazu dienen, zusätzliche Schaltmittel zur Verfügung zu haben. Insbesondere können sie geöffnet werden, um einen der Eingangsspannungsanschlüsse und einen damit verbundenen Verbindungspunkt voneinander zu trennen, beispielsweise um einen Stromabfluss aus dem zweiten Verbindungspunkt in den zweiten Eingangsspannungsanschluss und in ein Bordnetz zu verhindern. Entsprechend können Dioden, sofern vorhanden, gepolt sein.

Insbesondere kann an dem ersten Verbindungspunkt eine Ventilanordnung des Bremssystems angeschlossen sein. Diese wird somit in einem Normalbetrieb aus dem ersten Eingangsspannungsanschluss, beispielsweise mittels einer Batterie, betrieben. Wenn die schaltbare Verbindung geschlossen wird, werden typischerweise sowohl der Elektromotor wie auch die Bedienanordnung mittels des ersten Eingangsspannungsanschlusses versorgt.

Insbesondere kann parallel zur schaltbaren Verbindung eine Diode mit Durchlassrichtung zum zweiten Verbindungspunkt hin verschaltet sein. Dadurch kann in einfacher Weise sichergestellt werden, dass ein am zweiten Verbindungspunkt unmittelbar angeschlossener Verbraucher, beispielsweise die im vorherigen Absatz erwähnte Ventilanordnung, grundsätzlich vom zweiten Eingangsspannungsanschluss aus versorgt werden kann, ohne dass hierfür ein Schaltvorgang erforderlich ist. Für den Fall eines Ausfalls der Batterie kann somit unproblematisch der entsprechende Verbraucher weiter versorgt werden. In umgekehrter Richtung ist eine Versorgung jedoch nur durch aktives Schließen der ersten Verbindung möglich.

Die Erfindung betrifft des Weiteren ein Bremssystem, welches wie weiter oben bereits beschrieben ausgeführt ist und dazu konfiguriert ist, ein erfindungsgemäßes Verfahren auszuführen. Bezüglich des Bremssystems und des Verfahrens kann auf alle hierin beschriebenen Ausführungen und Varianten zurückgegriffen werden.

Allgemein gesagt wird durch die vorliegende Erfindung eine Spannungsdifferenz beim Schließen einer schaltbaren Verbindung verringert, um eventuell schädliche Ströme zu verringern. Hierzu kann in vorteilhafter Weise eine Rekuperationsfunktion eines Elektromotors verwendet werden. Bei dem Elektromotor kann es sich beispielsweise um einen bürstenlosen Gleichstrommotor handeln. Die Energie kann dabei insbesondere aus einer elastischen Energie eines bereits unter Druck gesetzten Systems stammen, oder auch aus einer kinetischen Energie eines sich bereits drehenden Elektromotors.

Die Erfindung wird nun anhand der Figuren beschrieben. Dabei zeigen:
Fig. 1: ein Bremssystem, und
Fig. 2: ein Ablaufdiagramm.

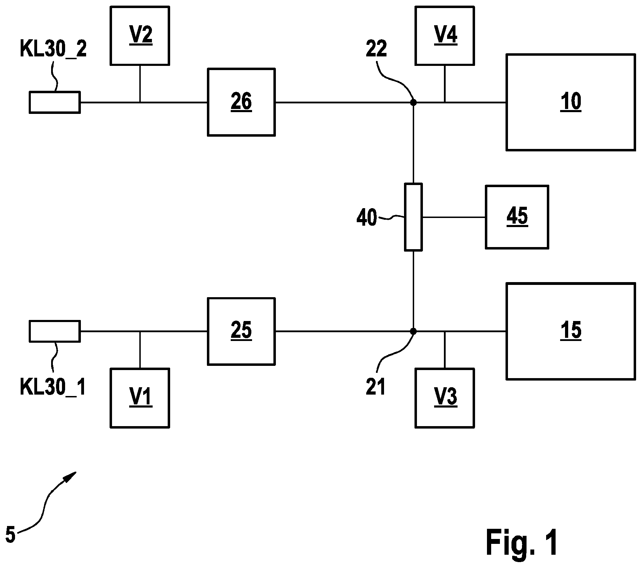

Fig. 1 zeigt ein Bremssystem 5, auf welchem ein erfindungsgemäßes Verfahren ausgeführt werden kann.

Das Bremssystem 5 weist einen ersten Eingangsspannungsanschluss KL30_1 und einen zweiten Eingangsspannungsanschluss KL30_2 auf. Der erste Eingangsspannungsanschluss KL30_1 ist typischerweise mit einer Batterie verbunden. Der zweite Eingangsspannungsanschluss KL30_2 ist typischerweise mit einem Bordnetz eines Kraftfahrzeugs verbunden.

Der erste Eingangsspannungsanschluss KL30_1 ist über einen ersten Schalter 25 mit einem ersten Verbindungsknoten 21 verbunden. Der zweite Eingangsspannungsanschluss KL30_2 ist über einen zweiten Schalter 26 mit einem zweiten Verbindungsknoten 22 verbunden. Die Schalter 25, 26 können beispielsweise als Transistoren ausgeführt sein und dazu dienen, die Verbindung zwischen dem jeweiligen Eingangsspannungsanschluss KL30_1, KL30_2 und dem Verbindungsknoten 21, 22 zu unterbrechen oder freizugeben.

An dem ersten Verbindungsknoten 21 ist eine Ventilanordnung 15 angeschlossen. Diese beinhaltet eine Mehrzahl von schaltbaren Ventilen, welche zum Betrieb des Bremssystems dienen, auf welche jedoch hier nicht weiter eingegangen wird.

Der zweite Verbindungsknoten 22 ist mit einem Elektromotor 10 verbunden. Der Elektromotor 10 treibt typischerweise eine Pumpe oder einen Linearaktuator an, um fahrerunabhängig Druck in dem Bremssystem 5 zu erzeugen.

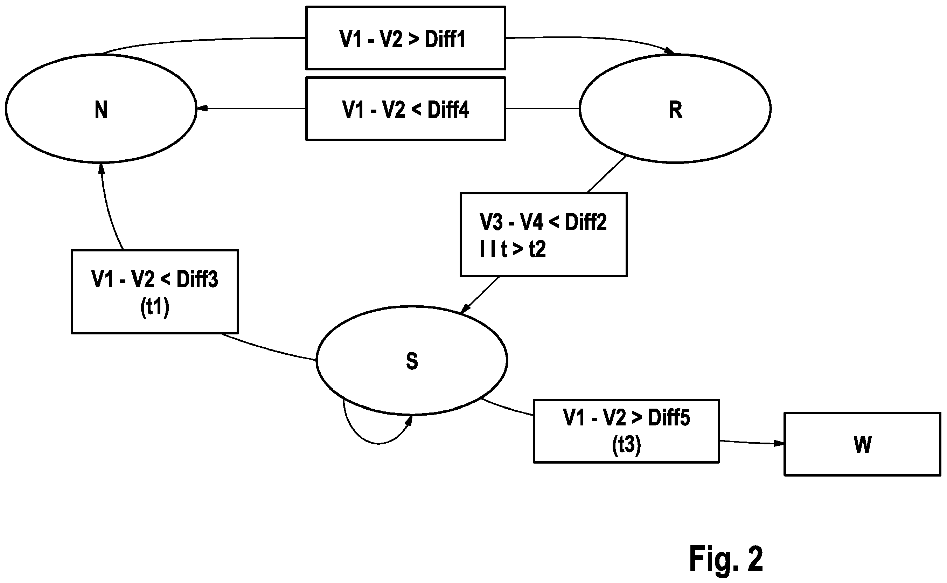

Zwischen dem ersten Verbindungsknoten 21 und dem zweiten Verbindungsknoten 22 ist eine schaltbare Verbindung 40 ausgebildet. Diese kann entweder offen oder geschlossen geschaltet werden. Somit können der erste Verbindungsknoten 21 und der zweite Verbindungsknoten 22 gezielt voneinander getrennt oder miteinander verbunden werden. Zur Steuerung ist eine Steuerungsvorrichtung 45 vorgesehen, welche ein erfindungsgemäßes Verfahren ausführt, wie nachfolgend mit Bezug auf Fig. 2 beschrieben werden wird.

Das Bremssystem 5 weist insgesamt vier Spannungssensoren auf, welche in Fig. 1 mit ihren jeweiligen Spannungen bezeichnet sind. So wird am ersten Eingangsspannungsanschluss KL30_1 eine erste Spannung V1 gemessen. Am zweiten Eingangsspannungsanschluss KL30_2 wird eine zweite Spannung V2 gemessen. Am ersten Verbindungsknoten 21 wird eine dritte Spannung V3 gemessen. Am zweiten Verbindungsknoten 22 wird eine vierte Spannung V4 gemessen. Die Vorgehensweise wird nun exemplarisch mit Bezug auf Fig. 2 beschrieben werden.

Zunächst befindet sich das Bremssystem bei einwandfreier Funktion aller Komponenten in einem Normalbetrieb N. Dabei wird laufend eine Spannungsdifferenz V1-V2 zwischen der ersten Eingangsspannung V1 und der zweiten Eingangsspannung V2 überwacht. Wenn diese einen ersten Schwellenwert Diff 1 übersteigt, so geht das Bremssystem 5 zunächst in einen Rekuperationsbetrieb R über. Der Rekuperationsbetrieb R ist dadurch charakterisiert, dass der Elektromotor 10 für eine begrenzte Zeit in Rekuperation betrieben wird, so dass er aus seiner ohnehin vorhandenen Drehung oder aus einem Druck in einem hydraulischen Bereich des Bremssystems 5 Energie gewinnen kann. Dadurch wird die Spannung am zweiten Verbindungsknoten 22 mittels des Elektromotors 10 erhöht. Die ansonsten vorhandene Spannungsdifferenz V3-V4 zwischen dem ersten Verbindungsknoten 21 und dem zweiten Verbindungsknoten 22 wird auf diese Weise verringert. Wenn sie einen zweiten Schwellenwert Diff2 unterschreitet oder alternativ wenn eine zweite Zeitdauer t2 abgelaufen ist, schaltet das Bremssystem 5 in einen geschalteten Modus S, in welchem die schaltbare Verbindung 40 geschlossen wird. Somit ist nun eine Versorgung des Elektromotors 10 mittels des ersten Eingangsspannungsanschlusses KL30_1 möglich. Fällt also die Versorgung durch das Bordnetz am zweiten Eingangsspannungsanschluss KL30_2 aus, so wird dieser Ausfall dadurch kompensiert, dass nun der Elektromotor 10 im Batteriebetrieb läuft.

Sollte hingegen im Rekuperationsmodus die Spannungsdifferenz V1-V2 zwischen erstem Eingangsspannungsanschluss KL30_1 und zweitem Eingangsspannungsanschluss KL30_2 unter einen vierten Schwellenwert Diff4 fallen, so wird die schaltbare Verbindung 40 nicht geöffnet, sondern es wird unmittelbar in den Normalzustand zurückgekehrt, die Rekuperation wird also beendet. In diesem Fall wird unmittelbar eine Rückkehrsperre aktiviert, welche für einen vorbestimmten Sicherungszeitraum aktiv bleibet. Sollte bei aktivierter Rückkehrsperre wieder in den Rekuperationsmodus gewechselt werden und dann wieder das Ereignis eintreten, dass vor Öffnung der schaltbaren Verbindung 40 die Spannungsdifferenz V1-V2 zwischen erstem Eingangsspannungsanschluss KL30_1 und zweitem Eingangsspannungsanschluss KL30_2 unter den vierten Schwellenwert Diff4 abfällt, so wird eine Rückkehr in den Normalzustand verhindert. Vielmehr wird dann zwingend zunächst in den geschalteten Zustand gewechselt, und zwar nach den bereits weiter oben erläuterten Regeln. Als Alternative zur unmittelbaren Aktivierung der Rückkehrsperre kann auch jedes Mal, wenn ein Übergang vom Normalbetrieb in den Rekuperationsmodus erfolgt, ein Wechselzähler erhöht werden. Wenn dieser einen bestimmten Wert von beispielsweise 2, 3, 4 oder 5 einnimmt, und dies insbesondere innerhalb einer vorgegebenen Überwachungszeit von beispielsweise 10 s, 20s oder 50s oder auch bis zum nächsten Zündungswechsel, wird die Rückkehrsperre aktiviert. Dadurch kann ein mehrfaches Wechseln zwischen Normalbetrieb und Rekuperationsmodus zugelassen werden.

Fällt die Spannungsdifferenz V1-V2 zwischen dem ersten Eingangsanschluss KL30_1 und dem zweiten Eingangsspannungsanschluss KL30_2 zumindest für eine erste Zeitdauer t1 wieder unter einen dritten Schwellenwert Diff3, so kehrt das System in den Normalbetrieb zurück, d.h. insbesondere, dass die schaltbare Verbindung 40 wieder geöffnet wird. Folglich wird somit wieder der Elektromotor 10 ausschließlich vom zweiten Eingangsspannungsanschluss KL30_2 aus betrieben und die Ventileinheit 15 wird ausschließlich vom ersten Eingangsspannungsanschluss KL30_1 aus betrieben.

Sollte jedoch die Spannungsdifferenz V1-V2 zwischen dem ersten Eingangsspannungsanschluss KL30_1 und dem zweiten Eingangsspannungsanschluss KL30_2 für eine dritte Zeitdauer t3 über einem fünften Schwellenwert Diff5 liegen, so wird eine Warnmeldung W aktiviert. Dies kann beispielsweise eine Anzeige in einem Instrumentenbrett eines Kraftfahrzeugs sein. Dadurch wird der Fahrer darauf hingewiesen, dass eine Fehlfunktion am Bremssystem vorliegt und er vorsichtiger fahren soll, da eventuell mit Betriebseinschränkungen des Bremssystems 5 zu rechnen ist.

## Patentansprüche

1. Verfahren zum Betreiben eines Bremssystems (5),
- wobei das Bremssystem (5) folgendes aufweist:
- einen ersten Eingangsspannungsanschluss (KL30_1),
- einen zweiten Eingangsspannungsanschluss (KL30_2),
- einen Elektromotor (10), **gekennzeichnet durch**
- eine schaltbare Verbindung (40) zwischen einem ersten Verbindungspunkt (21), welcher mit dem ersten Eingangsspannungsanschluss (KL30_1) verbunden ist, und einem zweiten Verbindungspunkt (22), welcher mit dem zweiten Eingangsspannungsanschluss (KL30_2) und dem Elektromotor (10) verbunden ist,
- wobei die schaltbare Verbindung (40) im Normalbetrieb (N) geöffnet ist, und
- wobei ansprechend auf eine detektierte Spannungsdifferenz (V1-V2) zwischen dem ersten Eingangsspannungsanschluss (KL30_1) und dem zweiten Eingangsspannungsanschluss (KL30_2), welche über einem ersten Schwellenwert (Diff1) liegt,
- der Elektromotor (10) in einem Rekuperationsmodus (R) betrieben wird, und dann
- ansprechend auf eine detektierte Spannungsdifferenz (V3-V4) zwischen dem ersten Verbindungspunkt (21) und dem zweiten Verbindungspunkt (22), welche unter einem zweiten Schwellenwert (Diff2) liegt, die schaltbare Verbindung (40) geschlossen wird.

2. Verfahren nach Anspruch 1,
- wobei bei geschlossener schaltbarer Verbindung (40) ansprechend auf eine detektierte Spannungsdifferenz (V1-V2) zwischen dem ersten Eingangsspannungsanschluss (KL30_1) und dem zweiten Eingangsspannungsanschluss (KL30_2), welche für eine erste Zeitdauer (t1) unter einem dritten Schwellenwert (Diff3) liegt, die schaltbare Verbindung (40) geöffnet wird und/oder in den Normalbetrieb (N) zurückgekehrt wird.

3. Verfahren nach Anspruch 2,
- wobei der dritte Schwellenwert (Diff3) identisch zum ersten Schwellenwert (Diff 1) ist;
und/oder
- wobei der dritte Schwellenwert (Diff3) zwischen 3,5 V und 4,5 V, oder 4 V, beträgt;
und/oder
- wobei die erste Zeitdauer (t1) zwischen 10 ms und 30 ms, oder 20 ms, beträgt, oder zwischen 10 ms und 1,8 s beträgt.

4. Verfahren nach einem der vorhergehenden Ansprüche,
- wobei in einem Zustand, in welchem der Elektromotor in dem Rekuperationsmodus betrieben wird, jedoch die schaltbare Verbindung noch geöffnet ist, ansprechend darauf, dass die Spannungsdifferenz (V1-V2) zwischen dem ersten Eingangsspannungsanschluss und dem zweiten Eingangsspannungsanschluss unter einen vierten Schwellenwert (Diff4) abfällt, wieder in den Normalbetrieb zurückgekehrt wird.

5. Verfahren nach Anspruch 4,
- wobei bei unmittelbarer Rückkehr vom Rekuperationsmodus in den Normalbetrieb, oder bei Überschreibung einer vorgegebenen Anzahl von unmittelbarer Rückkehr vom Rekuperationsmodus in den Normalbetrieb innerhalb einer vorgegebenen Überwachungszeit, eine Rückkehrsperre aktiviert wird, welche für eine vorbestimmte Sicherungszeit aktiviert bleibt, wobei bei aktivierter Rückkehrsperre eine unmittelbare Rückkehr vom Rekuperationsmodus in den Normalbetrieb unterbunden wird.

6. Verfahre nach Anspruch 5,
- wobei nach Aktivierung der Rückkehrsperre ein Fehlerspeichereintrag vorgenommen wird und/oder eine Rückkehr in den Normalzustand bis zum Deaktivieren einer Zündung verhindert wird.

7. Verfahren nach einem der vorhergehenden Ansprüche,
- wobei auch ansprechend auf eine Überschreitung einer zweiten Zeitdauer (t2), in welcher der Elektromotor (10) im Rekuperationsmodus (R) betrieben wird, die schaltbare Verbindung (40) geschlossen wird.

8. Verfahren nach Anspruch 7,
- wobei die zweite Zeitdauer (t2) zwischen 10 ms und 100 ms, oder 50 ms, beträgt.

9. Verfahren nach einem der vorhergehenden Ansprüche,
- wobei der erste Schwellenwert (Diff1) zwischen 3,5 V und 4,5 V, oder 4 V, beträgt;
und/oder
- wobei der zweite Schwellenwert (Diff2) zwischen 0,25 V und 2 V, oder 0,5 V, beträgt.

10. Verfahren nach einem der vorhergehenden Ansprüche,
- wobei ansprechend auf eine detektierte Spannungsdifferenz (V1-V2) zwischen dem ersten Eingangsspannungsanschluss und dem zweiten Eingangsspannungsanschluss (KL30_2), welche für eine dritte Zeitdauer (t3) über einem fünften Schwellenwert (Diff5) liegt, eine Warnfunktion (W) aktiviert wird.

11. Verfahren nach Anspruch 10,
- wobei die dritte Zeitdauer (t3) zwischen 50 ms und 1 s, oder 100 ms, beträgt.

12. Verfahren nach einem der vorhergehenden Ansprüche,
- wobei der erste Eingangsspannungsanschluss (KL30_1) mit einer Batterie verbunden ist,
und/oder
- wobei der zweite Eingangsspannungsanschluss (KL30_2) mit einem Generator verbunden ist.

13. Verfahren nach einem der vorhergehenden Ansprüche,
- wobei zwischen dem ersten Eingangsspannungsanschluss (KL30_1) und dem ersten Verbindungspunkt (21) ein erster Schalter (25) oder eine erste Diode verbunden ist,
und/oder
- wobei zwischen dem zweiten Eingangsspannungsanschluss (KL30_2) und dem zweiten Verbindungspunkt (22) ein zweiter Schalter (26) oder eine zweite Diode verbunden ist.

14. Verfahren nach einem der vorhergehenden Ansprüche,
- wobei an dem ersten Verbindungspunkt (21) eine Ventilanordnung (15) des Bremssystems (5) angeschlossen ist.

15. Verfahren nach einem der vorhergehenden Ansprüche,
- wobei parallel zur schaltbaren Verbindung (40) eine Diode mit Durchlassrichtung zum ersten Verbindungspunkt (21) hin verschaltet ist.

## Claims

1. Method for operating a braking system (5),
- wherein the braking system (5) comprises the following:
- a first input voltage terminal (KL30_1),
- a second input voltage terminal (KL30_2),
- an electric motor (10), **characterized by**
- a switchable connection (40) between a first connection point (21) connected to the first input voltage terminal (KL30_1) and a second connection point (22) connected to the second input voltage terminal (KL30_2) and the electric motor (10),
- wherein the switchable connection (40) is open in normal operation (N), and
- wherein in response to a detected voltage difference (V1-V2) between the first input voltage terminal (KL30_1) and the second input voltage terminal (KL30_2) which is above a first threshold value (Diff1),
- the electric motor (10) is operated in a recuperation mode (R), and then
- in response to a detected voltage difference (V3-V4) between the first connection point (21) and the second connection point (22) which is below a second threshold value (Diff2), the switchable connection (40) is closed.

2. Method according to Claim 1,
- wherein with the switchable connection (40) closed, in response to a detected voltage difference (V1-V2) between the first input voltage terminal (KL30_1) and the second input voltage terminal (KL30_2) which is below a third threshold value (Diff3) for a first time duration (t1), the switchable connection (40) is opened and/or there is a return to normal operation (N).

3. Method according to Claim 2,
- wherein the third threshold value (Diff3) is identical to the first threshold value (Diff1);
and/or
- wherein the third threshold value (Diff3) is between 3.5 V and 4.5 V, or 4 V;
and/or
- wherein the first time duration (t1) is between 10 ms and 30 ms, or 20 ms, or is between 10 ms and 1.8 s.

4. Method according to any of the preceding claims,
- wherein in a state in which the electric motor is operated in the recuperation mode, but the switchable connection is still open, in response to the voltage difference (V1-V2) between the first input voltage terminal and the second input voltage terminal falling below a fourth threshold value (Diff4), there is a return again to normal operation.

5. Method according to Claim 4,
- wherein upon direct return from the recuperation mode to normal operation, or upon a predefined number of direct return from the recuperation mode to normal operation within a predefined monitoring time being exceeded, a return prohibition is activated, which remains activated for a predetermined safeguard time, wherein with the return prohibition activated, a direct return from the recuperation mode to normal operation is prevented.

6. Method according to Claim 5,
- wherein after activation of the return prohibition, a fault memory entry is carried out and/or a return to the normal state is prevented until the deactivation of an ignition.

7. Method according to any of the preceding claims,
- wherein the switchable connection (40) is also closed in response to a second time duration (t2) being exceeded, in which second time duration the electric motor (10) is operated in the recuperation mode (R).

8. Method according to Claim 7,
- wherein the second time duration (t2) is between 10 ms and 100 ms, or 50 ms.

9. Method according to any of the preceding claims,
- wherein the first threshold value (Diff1) is between 3.5 V and 4.5 V, or 4 V;
and/or
- wherein the second threshold value (Diff2) is between 0.25 V and 2 V, or 0.5 V.

10. Method according to any of the preceding claims,
- wherein in response to a detected voltage difference (V1-V2) between the first input voltage terminal and the second input voltage terminal (KL30_2) which is above a fifth threshold value (Diff5) for a third time duration (t3), a warning function (W) is activated.

11. Method according to Claim 10,
- wherein the third time duration (t3) is between 50 ms and 1 s, or 100 ms.

12. Method according to any of the preceding claims,
- wherein the first input voltage terminal (KL30_1) is connected to a battery,
and/or
- wherein the second input voltage terminal (KL30_2) is connected to a generator.

13. Method according to any of the preceding claims,
- wherein a first switch (25) or a first diode is connected between the first input voltage terminal (KL30_1) and the first connection point (21), and/or
- wherein a second switch (26) or a second diode is connected between the second input voltage terminal (KL30_2) and the second connection point (22).

14. Method according to any of the preceding claims,
- wherein a valve arrangement (15) of the braking system (5) is connected to the first connection point (21).

15. Method according to any of the preceding claims,
- wherein a diode having a forward direction toward the first connection point (21) is interconnected in parallel with the switchable connection (40).

## Revendications

1. Procédé de fonctionnement d'un système de freinage (5),
- le système de freinage (5) comportant les éléments suivants :
- une première borne de tension d'entrée (KL30_1),
- une deuxième borne de tension d'entrée (KL30_2),
- un moteur électrique (10), **caractérisé par**
- une liaison commutable (40) entre un premier point de liaison (21) qui est relié à la première borne de tension d'entrée (KL30_1) et un deuxième point de liaison (22) qui est relié à la deuxième borne de tension d'entrée (KL30_2) et au moteur électrique (10),
- la liaison commutable (40) étant ouverte en fonctionnement normal (N), et
- en réponse à une différence de tension (V1-V2) qui est détectée entre la première borne de tension d'entrée (KL30_1) et la deuxième borne de tension d'entrée (KL30_2) et qui est supérieure à une première valeur seuil (Diff1),
- le moteur électrique (10) fonctionnant en mode de récupération (R), puis
- en réponse à une différence de tension (V3-V4) qui est détectée entre le premier point de liaison (21) et le deuxième point de liaison (22) et qui est inférieure à une deuxième valeur seuil (Diff2), la liaison commutable (40) étant fermée.

2. Procédé selon la revendication 1,
- lorsque la liaison commutable (40) est fermée, en réponse à une différence de tension (V1-V2) qui est détectée entre la première borne de tension d'entrée (KL30_1) et la deuxième borne de tension d'entrée (KL30_2) et qui est inférieure à une troisième valeur seuil (Diff3) pendant une première durée (t1), la liaison commutable (40) étant ouverte et/ou étant ramenée dans le fonctionnement normal (N).

3. Procédé selon la revendication 2,
- la troisième valeur seuil (Diff3) étant identique à la première valeur seuil (Diff1) ;
et/ou
- la troisième valeur seuil (Diff3) étant comprise entre 3,5 V et 4,5 V, ou étant de 4 V ;
et/ou
- la première durée (t1) étant comprise entre 10 ms et 30 ms, ou étant de 20 ms, ou étant comprise entre 10 ms et 1,8 s.

4. Procédé selon l'une des revendications précédentes,
- cependant, dans un état dans lequel le moteur électrique fonctionne en mode de récupération, la liaison commutable étant toujours ouverte et étant ramenée en fonctionnement normal en réponse au fait que la différence de tension (V1-V2) entre la première borne de tension d'entrée et la deuxième borne de tension d'entrée tombe au-dessous d'une quatrième valeur seuil (Diff4).

5. Procédé selon la revendication 4,
- lorsqu'un retour immédiat du mode de récupération au fonctionnement normal est effectué, ou lorsqu'un nombre spécifié de retours immédiats du mode de récupération au fonctionnement normal est effectué pendant un temps de surveillance spécifié, un blocage de retour étant activé, qui reste activé pendant un temps de sécurité prédéterminée, un retour immédiat du mode de récupération au fonctionnement normal étant empêché lorsque le blocage de retour est activé.

6. Procédé selon la revendication 5,
- après l'activation du blocage de retour, une entrée de mémoire d'erreur étant effectuée et/ou un retour à l'état normal étant empêché jusqu'à ce la désactivation d'un allumage.

7. Procédé selon l'une des revendications précédentes,
- la liaison commutable (40) étant fermée également en réponse au dépassement d'une deuxième durée (t2) pendant laquelle le moteur électrique (10) fonctionne en mode de récupération (R).

8. Procédé selon la revendication 7,
- la deuxième durée (t2) étant comprise entre 10 ms et 100 ms, ou étant de 50 ms.

9. Procédé selon l'une des revendications précédentes,
- la première valeur seuil (Diff1) étant comprise entre 3,5 V et 4,5 V, ou étant de 4 V ;
et/ou
- la deuxième valeur seuil (Diff2) étant comprise entre 0,25 V et 2 V, ou étant de 0,5 V.

10. Procédé selon l'une des revendications précédentes,
- une fonction d'avertissement (W) étant activée en réponse à une différence de tension (V1-V2) qui est détectée entre la première borne de tension d'entrée et la deuxième borne de tension d'entrée (KL30_2) et qui est supérieure à une cinquième valeur seuil (Diff5) pour une troisième durée (t3).

11. Procédé selon la revendication 10,
- la troisième durée (t3) étant comprise entre 50 ms et 1 s, ou étant de 100 ms.

12. Procédé selon l'une des revendications précédentes,
- la première borne de tension d'entrée (KL30_1) étant reliée à une batterie, et/ou
- la deuxième borne de tension d'entrée (KL30_2) étant reliée à un générateur.

13. Procédé selon l'une des revendications précédentes,
- un premier commutateur (25) ou une première diode étant relié entre la première borne de tension d'entrée (KL30_1) et le premier point de liaison (21), et/ou
- un deuxième commutateur (26) ou une deuxième diode étant relié entre la deuxième borne de tension d'entrée (KL30_2) et le deuxième point de liaison (22).

14. Procédé selon l'une des revendications précédentes,
- un ensemble de soupapes (15) du système de freinage (5) étant relié au premier point de liaison (21).

15. Procédé selon l'une des revendications précédentes,
- une diode étant montée en parallèle avec la liaison commutable (40) en étant orientée en mode passant vers le premier point de liaison (21).
